# EUROPEAN PATENT APPLICATION

(11) **EP 4 439 469 A2**
(43) Date of publication of application: **02.10.2024**
(21) Application number: 24155497.1
(22) Date of filing: 02.02.2024
(51) Int. Cl.: G06T 13/40

(54) **PREDICTING LOWER BODY MOVEMENT FOR AVATARS**

(30) Priority: 30.03.2023 US 202318192876
(71) Applicant: Meta Platforms Technologies, LLC, Menlo Park, CA 94025 (US)
(72) Inventor: Bazin, Jean-Charles, Menlo Park (US); Bouaziz, Sofien, Menlo Park (US)
(74) Representative: Murgitroyd & Company

(57) **Abstract**

A method for predicting a lower body motion of an avatar is provided. The method includes generating an upper body avatar for a user of a headset, tracking a lower body posture of the user of the headset, retargeting the lower body posture to a lower body model, and merging the lower body model with the upper body avatar to form a full-body avatar for the user of the headset. A system including a memory storing instructions and a processor configured to execute the instructions and cause the system to perform the above method is also provided.

## Description

### BACKGROUND

### Technical Field

The present disclosure is related to generating avatars in virtual reality (VR) and augmented reality (AR) applications. More specifically, the present disclosure provides lower body avatar reconstructions for VR/AR applications.

### General Overview of Related Art

In the field of VR/AR applications, users wearing headsets can have their own avatars fashioned in real time according to their face gestures and immediate reactions to immersive reality environments. However, full-body representations of the users are typically cartoonish, unrealistic, and have little connection to the current activity, posture, and demeanor of the users. The lack of fidelity of the lower body representation of the users detracts to the immersive experience of the user.

Perception technologies to track the face and the upper body are readily available for headset users. Such technologies combine one or more input signals to infer plausible movement with machine learning (ML) or artificial intelligence (AI) algorithms. However, typical cameras in VR/AR headsets are unable to capture the lower legs and extremities of users. VR headsets are able to identify floor level when worn by a user. As a result, while facial or upper body avatars are readily available, there is a lack of accurate models for the lower body that can be combined or merged with the upper body avatars to make an accurate, full-body avatar in real time.

The disclosure herein concerns the above and related technical problems arising in the field of immersive reality applications for computer networks.

### SUMMARY

In a first aspect, a computer-implemented method includes generating an upper body avatar for a user of a headset, tracking a lower body posture of the user of the headset, retargeting the lower body posture to a lower body model, and merging the lower body model with the upper body avatar to form a full-body avatar for the user of the headset.

In some embodiments of the computer-implemented method, generating an upper-body avatar comprises tracking a face gesture of the user with a sensor mounted on the headset.

In some embodiments, tracking a lower-body posture of the user comprises collecting an image of at least one of an arm, a leg, a hand or a foot of the user with a camera mounted on the headset.

In some embodiments, tracking a lower-body posture of the user comprises receiving, from a mobile device, an image of the lower-body posture of the user.

In some embodiments, tracking a lower-body posture of the user comprises receiving an acceleration signal from an inertial measurement unit in the headset.

In some embodiments, tracking a lower-body posture of the user comprises identifying a running motion or a walking motion from a frequency in an acceleration signal from an inertial motion unit in the headset.

In some embodiments, tracking a lower-body posture of the user comprises identifying a sitting posture or a standing posture of the user.

In some embodiments, tracking a lower-body posture of the user comprises determining the lower-body posture based on a physical constraint for a lower-body motion.

In some embodiments, retargeting the lower-body posture to a lower-body model comprises optimizing a loss function in the lower-body model with the lower-body posture as a ground truth baseline for the loss function.

In some embodiments, merging the lower-body model with the upper-body avatar comprises removing object collisions of the lower-body model with an object in an immersive reality application.

In a second aspect, a system includes a memory storing multiple instructions and one or more processors configured to execute the instructions to cause the system to perform operations. The operations include to generate an upper body avatar for a user of a headset, to track a lower body posture of the user of the headset, to retarget the lower body posture to a lower body model, and to merge the lower body model with the upper body avatar to form a full-body avatar for the user of the headset.

In such a second aspect, the system includes a memory storing multiple instructions and one or more processors configured to execute the instructions to cause the system to perform operations which operations for example comprise operations corresponding to the computer-implemented method of the first aspect hereinabove described and preferred embodiments will be understood accordingly.

For example, in some embodiments of the system, to generate an upper-body avatar the one or more processors execute instructions to track a face gesture of the user with a sensor mounted on the headset.

In some embodiments, to track a lower-body posture of the user the one or more processors execute instructions to collect an image of at least one of an arm, a leg, a hand or a foot of the user with a camera mounted on the headset.

In some embodiments, to track a lower-body posture of the user the one or more processors execute instructions to receive, from a mobile device, an image of the lower-body posture of the user.

In some embodiments, to track a lower-body posture of the user the one or more processors execute instructions to receive an acceleration signal from an inertial measurement unit in the headset.

In a third aspect, a computer-implemented method for training a model to provide a view of a subject to an auto stereoscopic display in a virtual reality headset includes collecting multiple images of a lower body of one or more subjects in different postures, according to a capture script, updating a posture encoder and a movement encoder in a three-dimensional lower body model using the images of the lower body of one or more subjects, and generating, with the three-dimensional lower body model, a synthetic view of a lower body of a new subject.

In some embodiments, updating a movement encoder in the three-dimensional lower-body model comprises identifying a signal from a motion sensor indicative of the different postures of the one or more subjects.

In some embodiments, the different postures include a calisthenic posture of a subject, further comprising collecting a heart rate signal from the subject and updating the movement encoder with the heart rate signal.

In some embodiments, the computer-implemented method further comprises merging the three-dimensional lower-body model with an upper-body model of the new subject to form a full-body model of the new subject.

In some embodiments, the computer-implemented method further comprises providing the three-dimensional lower-body model to an immersive application installed in a headset.

In another aspect, a non-transitory, computer-readable medium stores instructions which, when executed by a processor in a computer, cause the computer to perform a method. The method includes generating an upper body avatar for a user of a headset, tracking a lower body posture of the user of the headset, retargeting the lower body posture to a lower body model, and merging the lower body model with the upper body avatar to form a full-body avatar for the user of the headset. The method is for example the computer-implemented method of the first aspect hereinabove described and preferred embodiments will be understood accordingly.

In yet another aspect, a system includes a first means to store instructions and a second means to execute the instructions to cause the system to perform a method. The method includes generating an upper body avatar for a user of a headset, tracking a lower body posture of the user of the headset, retargeting the lower body posture to a lower body model, and merging the lower body model with the upper body avatar to form a full-body avatar for the user of the headset. The method is for example the computer-implemented method of the first aspect hereinabove described and preferred embodiments will be understood accordingly.

These and other embodiments will be clear to one of ordinary skill in the art, in light of the following.

### BRIEF DESCRIPTION OF THE FIGURES

FIG. 1 illustrates an example architecture suitable for providing a real-time, lower body avatar in immersive applications, according to some embodiments.
FIG. 2 is a block diagram illustrating an example server and client from the architecture of FIG. 1, according to certain aspects of the disclosure.
FIGS. 3A-3C illustrate different configurations for the lower body motion of a user, and an associated signal indicative thereof, according to some embodiments.
FIG. 4 illustrates different postures of the user leading to distinct lower body configurations, according to some embodiments.
FIG. 5 illustrates different activities of the user leading to distinct lower body configurations, according to some embodiments.
FIG. 6 illustrates a flowchart in a method for predicting lower body animation for avatars, according to some embodiments.
FIG. 7 illustrates a flowchart in a method for training a model to provide a view of a subject to an auto stereoscopic display in a virtual reality headset, according to some embodiments.
FIG. 8 illustrates a computer system configured to perform at least some of the methods in FIGS. 6 and 7, according to some embodiments.

In the figures, like elements are labeled likewise, according to their description, unless explicitly stated otherwise.

### DETAILED DESCRIPTION OF THE FIGURES

In the following detailed description, numerous specific details are set forth to provide a full understanding of the present disclosure. It will be apparent, however, to one ordinarily skilled in the art, that embodiments of the present disclosure may be practiced without some of these specific details. In other instances, well-known structures and techniques have not been shown in detail so as not to obscure the disclosure.

### General Overview

Perception technologies to track the face and the upper body are readily available for headset users. Such technologies combine one or more input signals to infer plausible movement with machine learning (ML) or artificial intelligence (AI) algorithms. However, typical cameras in VR/AR headsets are unable to capture the lower legs and extremities of users. VR headsets are able to identify floor level when worn by a user. As a result, while facial or upper body avatars are readily available, there is a lack of accurate models for the lower body that can be combined or merged with the upper body avatars to make an accurate, full-body avatar in real time.

To resolve the above technical problem arising in the field of immersive reality applications for computer networks, embodiments as disclosed herein use sensor tracking data as inputs to suitably trained lower body simulations (*e*.*g*., via ML and AI techniques). Accordingly, some embodiments combine multiple signals from cameras, inertial motion units (IMUs), gyroscopes, and even electrocardiogram (ECG) or cardiovascular sensors such as photoplethysmography (PPG) sensors mounted on the headsets. The signals are combined with physically plausible simulation of the lower body as inputs in an ML or AI model to determine the most likely motion of the user's lower body. Additionally, some embodiments include tracking and mapping the user's face to a stylized character (cartoony character, fantasy character) that includes a verisimilar lower body attitude (*e*.*g.*, re-targeting an avatar).

Accordingly, embodiments as disclosed herein use ML, AI, and other neural-network-based algorithms trained with general motion capture data of multiple subjects, to predict a motion of the lower body of the subjects. For example, in some embodiments, the models predict or estimate a position of a subject's lower leg based on what the upper body is doing and even a facial expression of the user. In addition to IMUs mounted on the headset, some embodiments include IMUs and other sensors mounted on a wrist device such as a smart watch, a headset controller, and the like. The combination of multiple sensors in different parts of the body are used to sense user position and attitude.

In addition to tracking body motion via sensor data and facial expression, and re-targeting/mapping models to virtual characters, embodiments as disclosed herein apply corrective steps to remove object collisions. This makes the model more accurate and its use more agreeable and likeable for the public.

Further, some embodiments may be applied to AR and mobile phone devices, wherein the mobile phone may be used to capture an image of the user's lower body. Accordingly, some embodiments combine the sensing and computational capabilities of multiple devices to add new views of the body of the user into the tracking system.

### Example System Architecture

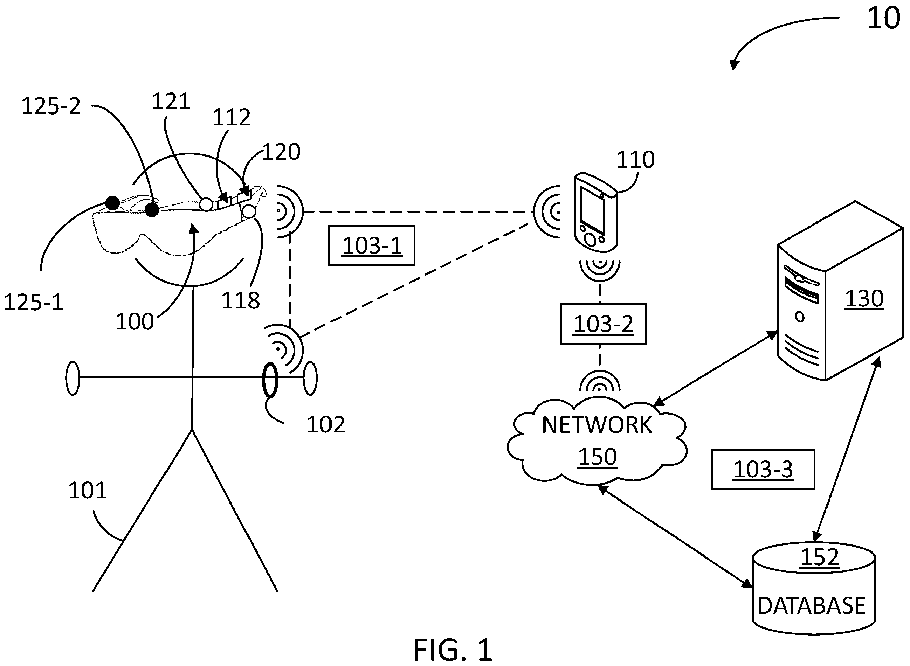

FIG. 1 illustrates an architecture 10 including a headset 100 coupled to one another, to a mobile device 110, a remote server 130 and to a database 152, according to some embodiments. Wearable devices 100 may include a smart glass 100-1 and a wrist-band 102 (or "watch"), and the mobile device may be a smart phone, all of which may communicate with one another via wireless communications and exchange a first dataset 103-1. Dataset 103-1 may include a recorded video, audio, or some other file or streaming media. A user 101 of wearable devices 100 is also the owner or is associated with mobile device 110. In some embodiments, at least one of headset 100 or wrist band 102 may directly communicate with remote server 130, database 152, or any other client device (*e.g.,* a smart phone of a different user, and the like) via a network 150. Mobile device 110 may be communicatively coupled with remote server 130 and database 152 via network 150, and transmit/share information, files, and the like with one another (*e*.*g*., dataset 103-2 and dataset 103-3). Datasets 103-1, 103-2, and 103-3 will be collectively referred to, hereinafter, as "datasets 103."

In some embodiments, smart glass 100-1 may include multiple sensors 121 such as inertial measurement units (IMUs), gyroscopes, microphones, cameras, and the like mounted within the frame of smart glass 100-1 or wrist-watch 100-2 or wrist-band. Other sensors 121 that can be included in the wearable devices 100 may be magnetometers, photodiodes and cameras, touch sensors, and other electromagnetic devices such as capacitive sensors, a pressure sensor, and the like. Smart glass 100-1 may include an acoustic microphone 125-1 and a contact microphone 125-2 (hereinafter, collectively referred to as "microphones 125"). Acoustic microphone 125-1 receives acoustic signals propagating through the air, as pressure waves. Contact microphone 125-2 may be mechanically coupled to the skin and a bone of the user, *e.g.,* in a nose pad or in an arm of smart glass 100-1, in contact with the user's temple, and the like.

In addition, smart glass 100-1, and any other wearable device 100, or mobile device 110 may include a memory circuit 120 storing instructions, and a processor circuit 112 configured to execute the instructions to cause smart glass 100-1 to perform, at least partially, some of the steps in methods consistent with the present disclosure. In some embodiments, smart glass 100-1, wrist-watch 100-2, wrist-band, or wearable device 100, mobile device 110, server 130 and/or database 152 may further include a communications module 118 enabling the device to wirelessly communicate with one another via network 150. In some embodiments, communications module 118 can include, for example, radio-frequency hardware (*e*.*g*., antennas, filters, analog to digital converters, and the like) and software (*e*.*g*., signal processing software). Smart glass 100-1 may thus download a multimedia online content (*e*.*g*., dataset 103-1) from remote server 130, to perform at least partially some of the operations in methods as disclosed herein. Network 150 may include, for example, any one or more of a local area network (LAN), a wide area network (WAN), the Internet, and the like. Further, the network can include, but is not limited to, any one or more of the following network topologies, including a bus network, a star network, a ring network, a mesh network, a star-bus network, tree or hierarchical network, and the like.

In some embodiments, users 101 may collect images of their lower body with mobile device 110 and feed this data into an ML or AI algorithm trained to generate a lower body avatar of user 101.

Accordingly, data from sensors 121 and microphones 125 may be included in datasets 103 and analyzed by an immersive reality application running in headset 100, in mobile device 110, or in server 130 to feed a lower body animation model and provide a full-body avatar for user 101 in the immersive reality application, as disclosed herein.

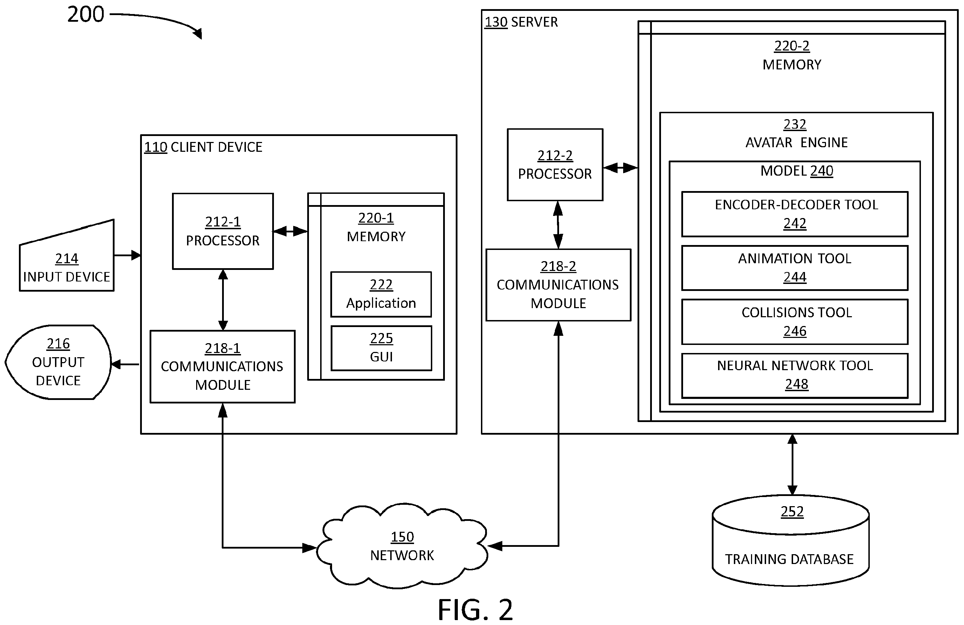

FIG. 2 is a block diagram 200 illustrating an example server 130 and client device 110 from architecture 10, according to certain aspects of the disclosure. Client device 110 and server 130 are communicatively coupled over network 150 via respective communications modules 218-1 and 218-2 (hereinafter, collectively referred to as "communications modules 218"). Communications modules 218 are configured to interface with network 150 to send and receive information, such as data, requests, responses, and commands to other devices via network 150. Communications modules 218 can be, for example, modems or Ethernet cards, and may include radio hardware and software for wireless communications (*e*.*g*., via electromagnetic radiation, such as radiofrequency -RF-, near field communications -NFC-, Wi-Fi, and Bluetooth radio technology). A user may interact with client device 110 via an input device 214 and an output device 216. Input device 214 may include a mouse, a keyboard, a pointer, a touchscreen, a microphone, a joystick, a virtual joystick, and the like. In some embodiments, input device 214 may include cameras, microphones, and sensors, such as touch sensors, acoustic sensors, inertial motion units -IMUs- and other sensors configured to provide input data to a VR/AR headset. For example, in some embodiments, input device 214 may include an eye tracking device to detect the position of a user's pupil in a VR/AR headset, or identify a facial gesture of the user. Output device 216 may be a screen display, a touchscreen, a speaker, and the like. Client device 110 may include a memory 220-1 and a processor 212-1. Memory 220-1 may include an application 222 and a GUI 225, configured to run in client device 110 and couple with input device 214 and output device 216. Application 222 may be downloaded by the user from server 130 and may be hosted by server 130. In some embodiments, client device 110 is a VR/AR headset and application 222 is an immersive reality application.

Server 130 includes a memory 220-2, a processor 212-2, and communications module 218-2. Hereinafter, processors 212-1 and 212-2, and memories 220-1 and 220-2, will be collectively referred to, respectively, as "processors 212" and "memories 220." Processors 212 are configured to execute instructions stored in memories 220. In some embodiments, memory 220-2 includes an avatar engine 232. Avatar engine 232 may share or provide features and resources to GLTI 225, including multiple tools associated with training and using a three-dimensional avatar rendering model for immersive reality applications (*e*.*g*., application 222). The user may access avatar engine 232 through application 222, installed in a memory 220-1 of client device 110. Accordingly, application 222, including GUI 225, may be installed by server 130 and perform scripts and other routines provided by server 130 through any one of multiple tools. Execution of application 222 may be controlled by processor 212-1.

In that regard, avatar engine 232 may be configured to create, store, update, and maintain a model 240, as disclosed herein. Model 240 may include a full-body avatar of a subject, including the head, arms, hands, and lower extremities. Model 240 may include an encoder-decoder tool 242, an animation tool 244, a collisions tool 246, and a neural network tool 248. Encoder-decoder tool 242 collects input images with multiple, simultaneous views of a subject and extracts pixel-aligned features to condition animation tool 244 to provide an animated motion of a full-body avatar. Animation tool 244 can generate novel views of the lower body of a subject from one or more sample images processed by encoder-decoder tool 242 and motion sensor information provided by a VR/AR headset. Collisions tool 246 identifies overlaps of the full-body avatar with other objects in an immersive reality application (*e*.*g*., walls, ground, other avatars, and even garments and clothes).

Neural network tool 248 may include algorithms trained for the specific purposes of the engines and tools in avatar engine 232. The algorithms may include machine learning or artificial intelligence algorithms making use of any linear or non-linear algorithm, such as a neural network algorithm, or multivariate regression algorithm. In some embodiments, the machine learning model may include a neural network (NN) tool 248, a convolutional neural network (CNN), a generative adversarial neural network (GAN), a deep reinforcement learning (DRL) algorithm, a deep recurrent neural network (DRNN), a classic machine learning algorithm such as random forest, k-nearest neighbor (KNN) algorithm, k-means clustering algorithms, or any combination thereof. More generally, the machine learning model may include any machine learning model involving a training step and an optimization step. In some embodiments, training database 252 may include a training archive to modify coefficients according to a desired outcome of the machine learning model. Accordingly, in some embodiments, avatar engine 232 is configured to access training database 252 to retrieve documents and archives as inputs for the machine learning model. In some embodiments, avatar engine 232, the tools contained therein, and at least part of training database 252 may be hosted in a different server that is accessible by server 130 or client device 110.

In some embodiments, avatar engine 232 may access one or more machine learning models stored in a training database 252. Training database 252 includes training archives and other data files that may be used by avatar engine 232 in the training of a machine learning model, according to the input of the user through application 222. Moreover, in some embodiments, at least one or more training archives or machine learning models may be stored in either one of memories 220 and the user may have access to them through application 222.

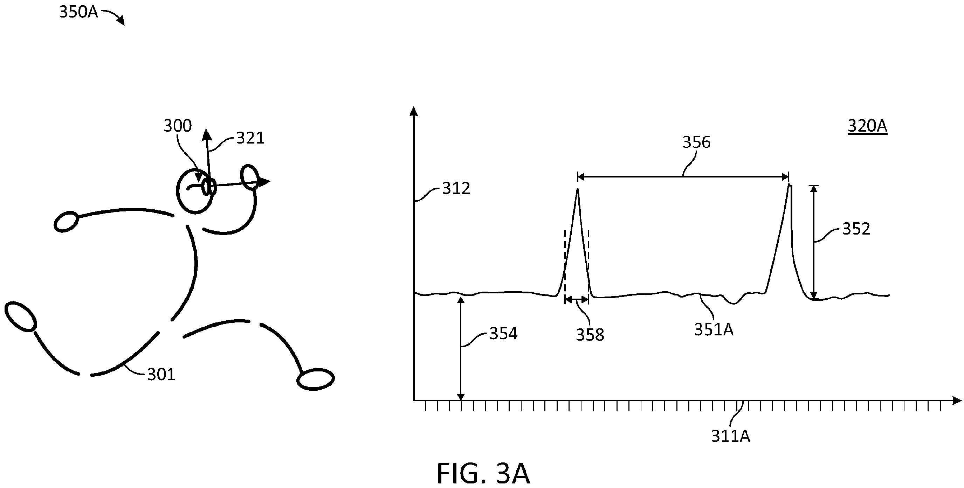

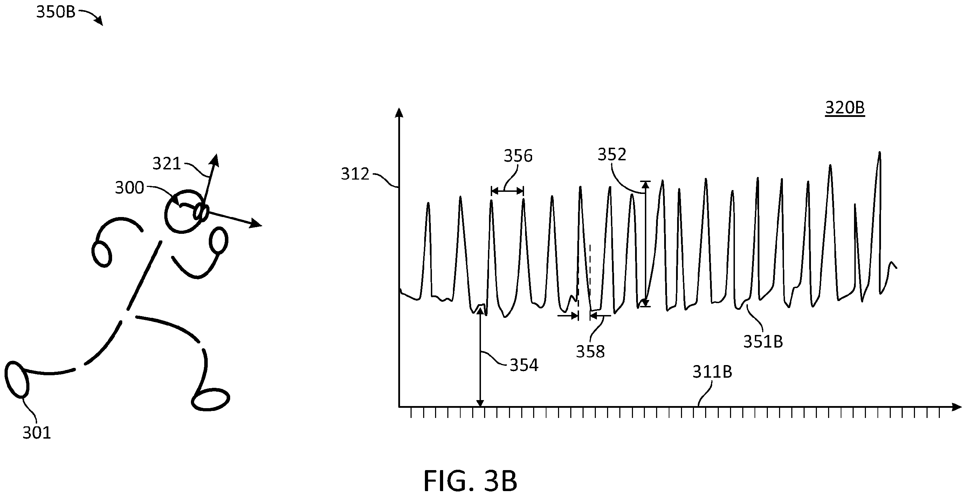

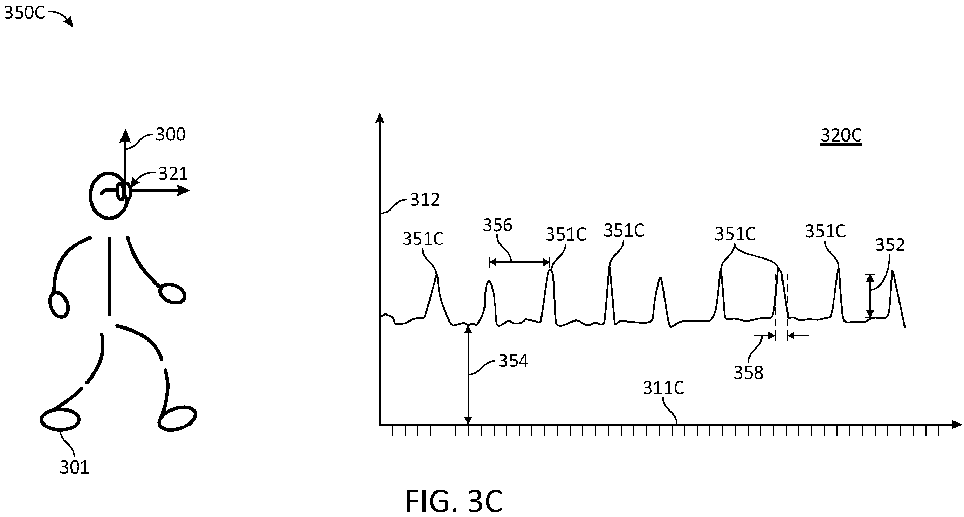

FIGS. 3A-3C illustrate different configurations 350A, 350B, and 350C (hereinafter, collectively referred to as "configurations 350") for the lower body motion of a user 301 and associated signals 351A, 351B, and 351C (hereinafter, collectively referred to as "signals 351 A") indicative thereof, according to some embodiments. Signals 351 may be collected by a sensor 321 in a smart glass 300. Sensor 321 may be an IMU sensor, a PPG sensor, an ECG sensor, or a microphone (*e*.*g*., a contact microphone and the like). Signal 351 is depicted in charts 320A, 320B, and 320C (hereinafter, collectively referred to as "charts 320"). Charts 320 include an amplitude 312 (*e.g.,* an electrical output such as voltage, current, resistance, magnetic field, inductance, and the like) in the ordinates, and time scales 311A, 311B, and 311C (hereinafter, collectively referred to as "time scales 311") in the abscissae. Signals 351 may be associated with configurations 350 according to certain attributes such as peak-to-bottom amplitude 352, background level 354, peak-to-peak periodicity 356, full width at half maximum 358 (FWHM) of the peaks, and the like.

In configuration 350A, user 301 is running at a fast pace, with a wide leg spread, high knee level, and floating over the floor level between steps. Signal 351A includes wide strong peaks widely separated in a time scale 311A.

In configuration 350B, user 301 is running at a slower pace than in configuration 350A, with a narrow leg spread and floating over the floor level between steps. Signal 351B includes variable peaks more narrowly separated in a time scale 311B that may be similar to time scale 311A.

In configuration 350C, user 301 is walking, with a narrow leg spread and having always one foot in contact with the floor. Signal 351C includes wide and weaker peaks in a wider span time scale 311A.

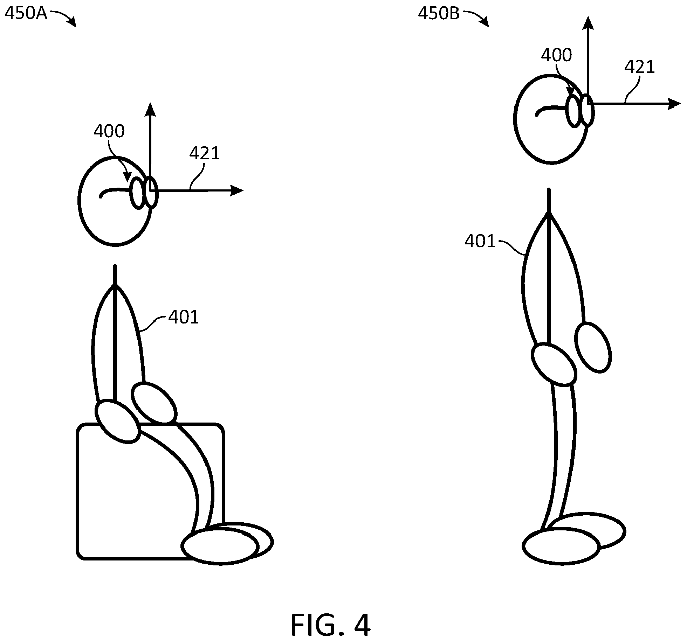

FIG. 4 illustrates different postures 450 of a user 401 of a headset 400 leading to distinct lower body configurations 450A and 450B (hereinafter, collectively referred to as "configurations 450"), according to some embodiments. Accordingly, embodiments as disclosed herein would determine the lower body posture of user 401 in configurations 450 and provide models to merge with the user's upper body (*e.g.,* head and shoulders) to merge into a full-body avatar for user 401.

In configuration 450A, user 401 is sitting. Sensor 421 may detect the lower height of headset 400 relative to the ground which, combined with prior knowledge of the height of user 401, can lead to the plausible indication that the user is sitting. Additionally, the knees or feet of the user may appear in the field of view (FOV) of a camera in headset 400, providing further confirmation of the user's attitude.

In configuration 450B, the user is standing. Sensor 421 may detect a higher position of headset 400 relative to the ground. Prior knowledge of the height of user 401 may also serve as proof that the user is standing. Further, sensor 421 may include a camera where the lower extremities of user 401 are missing, as would be the case in a standing configuration 450B.

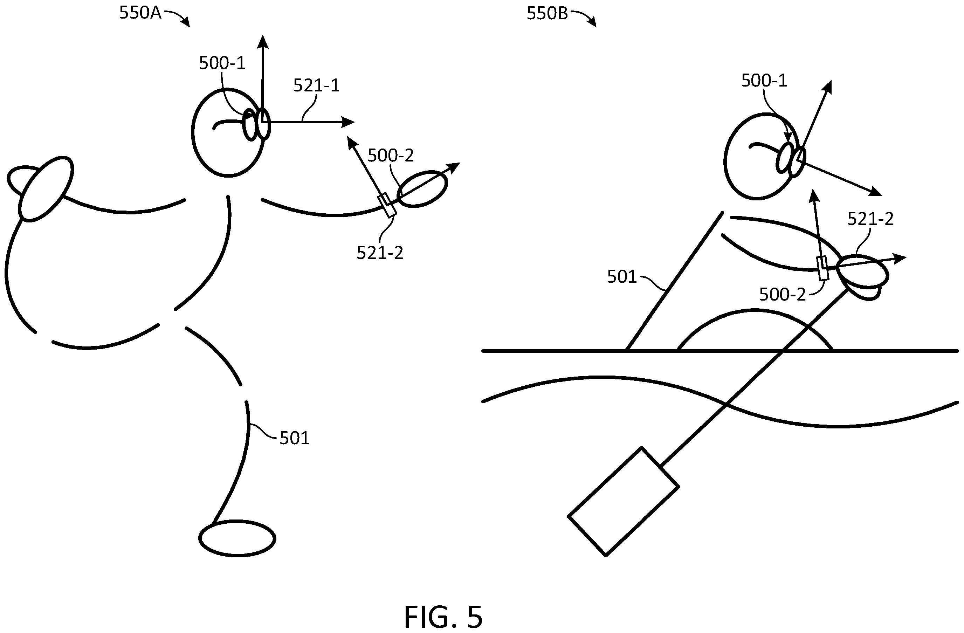

FIG. 5 illustrates different activities 550A and 550B (hereinafter, collectively referred to as "activities 550") of a user 501 of a headset 500-1 and a wrist device 500-2 (hereinafter, collectively referred to as "wearables 500"), leading to distinct lower body configurations, according to some embodiments. Wearable devices 500 may be in communication with each other, sharing relative position and orientation information provided by sensors 521-1 (headset 500-1) and 521-2 (wrist device 500-2), hereinafter, collectively referred to as "sensors 521." This information can be incorporated into a lower body model as disclosed herein, to provide accurate posture and movement of user 501. Additionally, ML and AI models as disclosed herein may be trained collecting images of subjects performing these highly stylized exercises (ballet dancing, skating, ice-skating, rowing, biking, and the like).

Activity 550A may include stylistic dancing postures, such as ballet, ice skating, skating, or heavy calisthenics. Accordingly, the lower extremities of user 501 such as feet, legs, and also the hands of user 501 may appear in the FOV of a camera 521-1.

Activity 550B may include a heavy exercise of the upper body (*e*.*g*., rowing). Sensors 521 may detect the legs, knees, and feet of user 501 (*e.g.,* the FOV of a camera), and even the row pallets, the back of the boat, and the body of water. Moreover, sensor 521-2 may detect a rhythmic motion of arms and body, consistent with a rowing attitude 550B.

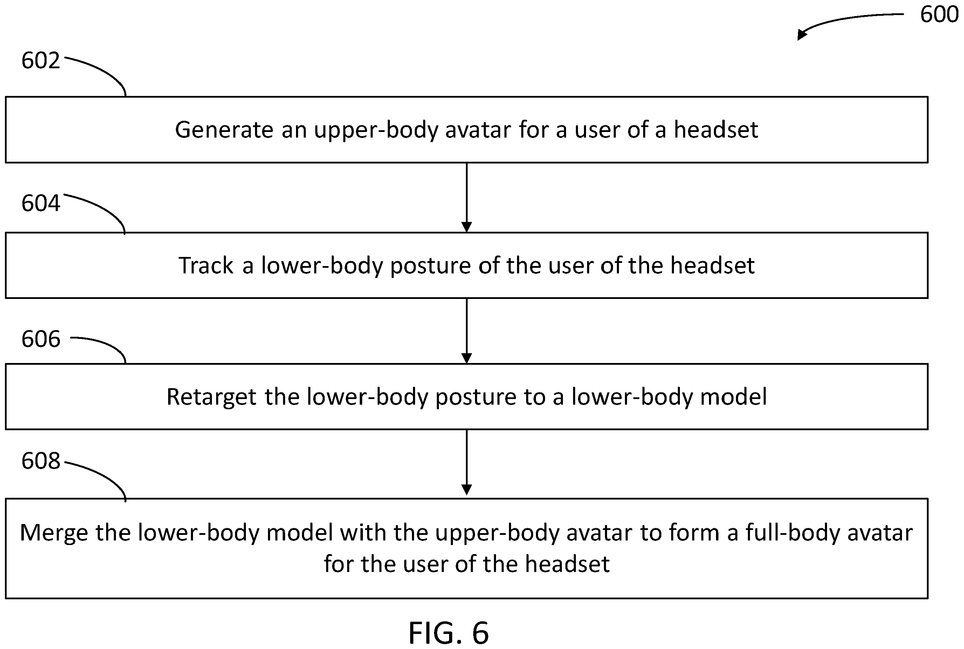

FIG. 6 illustrates a flowchart in a method 600 for predicting lower body animation for avatars, according to some embodiments. In some embodiments, at least one or more of the steps in method 600 may be performed by a processor executing instructions stored in a memory of a computer device in an AR/VR headset, a wearable device, a mobile device, a remote server or a database, all communicatively coupled via a network, through a communications module as disclosed herein *(cf.* processors 212 and memories 220, wearable devices 100, mobile device 110, server 130, database 152, communications module 118, and network 150). The memory may include instructions for an immersive reality application and a GUI for receiving user commands, an avatar engine, and a model including an encoder-decoder tool, an animation tool, a collisions tool, and a neural network tool, as disclosed herein (*cf.* application 222, GUI 225, avatar engine 232, model 240, encoder-decoder tool 242, animation tool 244, collisions tool 246, and neural network tool 248). Methods consistent with the present disclosure include at least one or more steps in method 600 performed in a different order, simultaneously, quasi-simultaneously, or overlapping in time.

Step 602 includes generating an upper body avatar for a user of a headset. In some embodiments, step 602 includes tracking a face gesture of the user with a sensor mounted on the headset.

Step 604 includes tracking a lower body posture of the user of the headset. In some embodiments, step 604 includes collecting an image of at least one of an arm, a leg, a hand, or a foot of the user with a camera mounted on the headset. In some embodiments, step 604 includes receiving, from a mobile device, an image of the lower body posture of the user. In some embodiments, step 604 includes receiving an acceleration signal from an inertial measurement unit in the headset. In some embodiments, step 604 includes identifying a running motion or a walking motion from a frequency in an acceleration signal from an inertial motion unit in the headset. In some embodiments, step 604 includes identifying a sitting posture or a standing posture of the user. In some embodiments, step 604 includes determining the lower body posture based on a physical constraint for a lower body motion.

Step 606 includes retargeting the lower body posture to a lower body model. In some embodiments, step 606 includes optimizing a loss function in the lower body model with the lower body posture as a ground truth baseline for the loss function.

Step 608 includes merging the lower body model with the upper body avatar to form a full-body avatar for the user of the headset. In some embodiments, step 608 includes removing object collisions of the lower body model with an object in an immersive reality application.

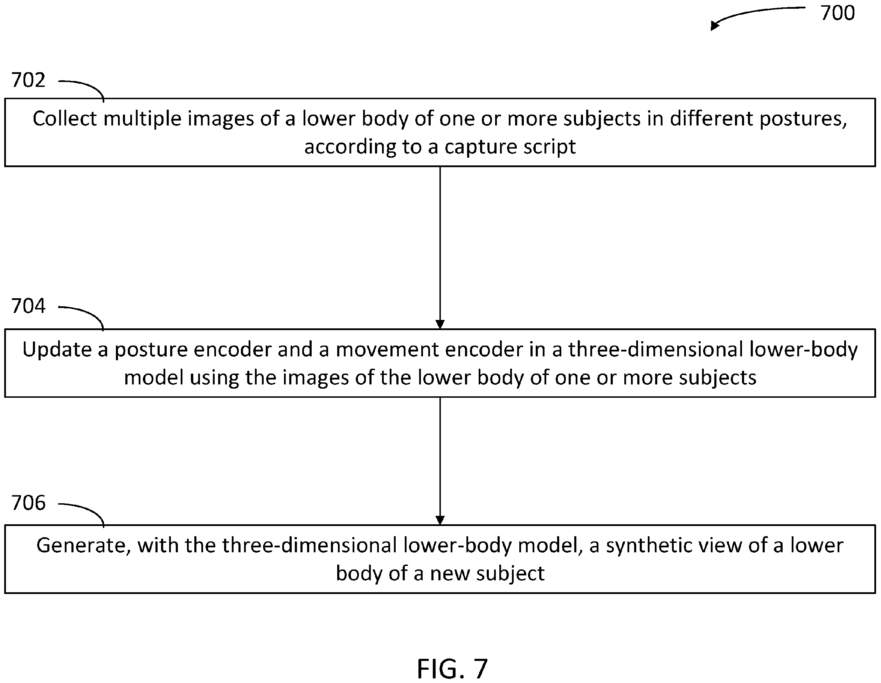

FIG. 7 illustrates a flowchart in a method 700 for training a model to provide a view of a subject to an auto stereoscopic display in a virtual reality headset, according to some embodiments. In some embodiments, at least one or more of the steps in method 700 may be performed by a processor executing instructions stored in a memory of a computer device in an AR/VR headset, a wearable device, a mobile device, a remote server or a database, all communicatively coupled via a network, through a communications module as disclosed herein (*cf.* processors 212 and memories 220, wearable devices 100, mobile device 110, server 130, database 152, communications module 118, and network 150). The memory may include instructions for an immersive reality application and a GLTI for receiving user commands, an avatar engine, and a model including an encoder-decoder tool, an animation tool, a collisions tool, and a neural network tool, as disclosed herein *(cf.* application 222, GUI 225, avatar engine 232, model 240, encoder-decoder tool 242, animation tool 244, collisions tool 246, and neural network tool 248). Methods consistent with the present disclosure include at least one or more steps in method 700 performed in different order, simultaneously, quasi-simultaneously, or overlapping in time.

Step 702 includes collecting multiple images of a lower body of one or more subjects in different postures, according to a capture script.

Step 704 includes updating a posture encoder and a movement encoder in a three-dimensional lower body model using the images of the lower body of one or more subjects.

Step 706 includes generating, with the three-dimensional lower body model, a synthetic view of a lower body of a new subject. In some embodiments, step 706 includes identifying a signal from a motion sensor indicative of the different postures of the one or more subjects. In some embodiments, the different postures include a calisthenic posture of a subject, and step 706 further includes collecting a heart rate signal from the subject and updating the movement encoder with the heart rate signal. In some embodiments step 706 includes training the three-dimensional lower body model based on a difference between an image of the new subject, and the synthetic view of the lower body of the new subject. In some embodiments, step 706 further includes merging the three-dimensional lower body model with an upper body model of the new subject to form a full-body model of the new subject. In some embodiments, step 706 further includes providing the three-dimensional lower body model to an immersive application installed in a headset.

### Hardware Overview

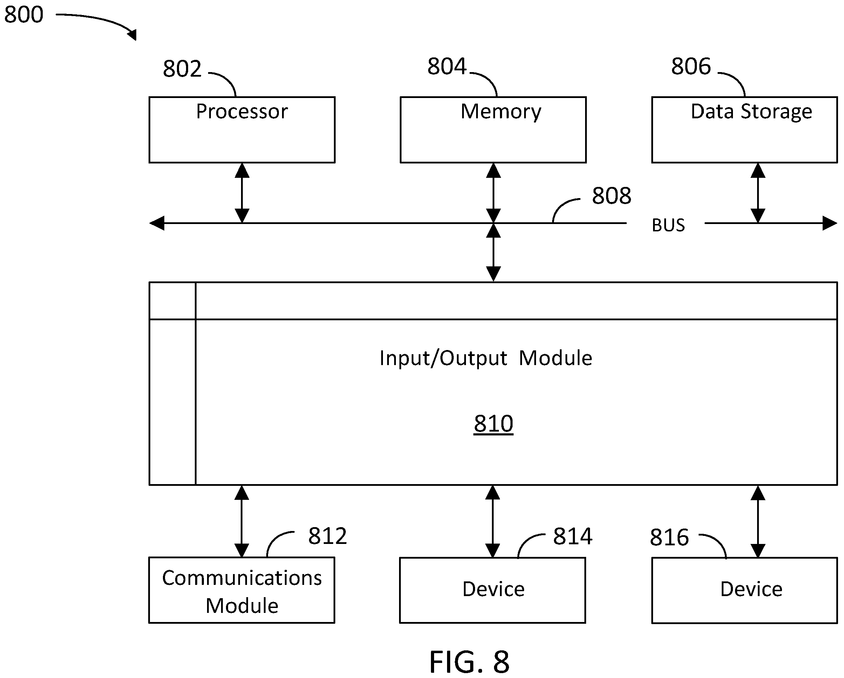

FIG. 8 is a block diagram illustrating an exemplary computer system 800 with which headsets and other client devices 110, and methods 600 and 700 can be implemented. In certain aspects, computer system 800 may be implemented using hardware or a combination of software and hardware, either in a dedicated server, or integrated into another entity, or distributed across multiple entities. Computer system 800 may include a desktop computer, a laptop computer, a tablet, a phablet, a smartphone, a feature phone, a server computer, or otherwise. A server computer may be located remotely in a data center or be stored locally.

Computer system 800 includes a bus 808 or other communication mechanism for communicating information, and a processor 802 (*e*.*g*., processors 212) coupled with bus 808 for processing information. By way of example, the computer system 800 may be implemented with one or more processors 802. Processor 802 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 800 can include, in addition to hardware, code that creates an execution environment for the computer program in question, *e*.*g*., code that constitutes processor firmware, a protocol stack, a database management system, an operating system, or a combination of one or more of them stored in an included memory 804 (*e*.*g*., memories 220), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled with bus 808 for storing information and instructions to be executed by processor 802. The processor 802 and the memory 804 can be supplemented by, or incorporated in, special purpose logic circuitry.

The instructions may be stored in the memory 804 and implemented in one or more computer program products, *e*.*g*., one or more modules of computer program instructions encoded on a computer-readable medium for execution by, or to control the operation of, the computer system 800, and according to any method well known to those of skill in the art, including, but not limited to, computer languages such as data-oriented languages (*e*.*g*., SQL, dBase), system languages (*e.g.,* C, Objective-C, C++, Assembly), architectural languages (*e.g.,* Java, .NET), and application languages (*e*.*g*., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, offside rule languages, procedural languages, reflective languages, rule-based languages, scripting languages, stack-based languages, synchronous languages, syntax handling languages, visual languages, wirth languages, and xml-based languages. Memory 804 may also be used for storing temporary variable or other intermediate information during execution of instructions to be executed by processor 802.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 800 further includes a data storage device 806 such as a magnetic disk or optical disk, coupled with bus 808 for storing information and instructions. Computer system 800 may be coupled via input/output module 810 to various devices. Input/output module 810 can be any input/output module. Exemplary input/output modules 810 include data ports such as USB ports. The input/output module 810 is configured to connect to a communications module 812. Exemplary communications modules 812 include networking interface cards, such as Ethernet cards and modems. In certain aspects, input/output module 810 is configured to connect to a plurality of devices, such as an input device 814 and/or an output device 816. Exemplary input devices 814 include a keyboard and a pointing device, *e.g.,* a mouse or a trackball, by which a consumer can provide input to the computer system 800. Other kinds of input devices 814 can be used to provide for interaction with a consumer as well, such as a tactile input device, visual input device, audio input device, or brain-computer interface device. For example, feedback provided to the consumer can be any form of sensory feedback, *e*.*g*., visual feedback, auditory feedback, or tactile feedback; and input from the consumer can be received in any form, including acoustic, speech, tactile, or brain wave input. Exemplary output devices 816 include display devices, such as an LCD (liquid crystal display) monitor, for displaying information to the consumer.

According to one aspect of the present disclosure, headsets and client devices 110 can be implemented, at least partially, using a computer system 800 in response to processor 802 executing one or more sequences of one or more instructions contained in memory 804. Such instructions may be read into memory 804 from another machine-readable medium, such as data storage device 806. Execution of the sequences of instructions contained in main memory 804 causes processor 802 to perform the process steps described herein. One or more processors in a multi-processing arrangement may also be employed to execute the sequences of instructions contained in memory 804. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, *e*.*g*., a data server, or that includes a middleware component, *e.g.,* an application server, or that includes a front end component, *e.g.,* a client computer having a graphical consumer interface or a Web browser through which a consumer can interact with an implementation of the subject matter described in this specification, or any combination of one or more such back end, middleware, or front end components. The components of the system can be interconnected by any form or medium of digital data communication, *e*.*g*., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 800 can include clients and servers. A client and server are generally remote from each other and typically interact through a communication network. The relationship of client and server arises by virtue of computer programs running on the respective computers and having a client-server relationship to each other. Computer system 800 can be, for example, and without limitation, a desktop computer, laptop computer, or tablet computer. Computer system 800 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 802 for execution. Such a medium may take many forms, including, but not limited to, non-volatile media, volatile media, and transmission media. Non-volatile media include, for example, optical or magnetic disks, such as data storage device 806. Volatile media include dynamic memory, such as memory 804. Transmission media include coaxial cables, copper wire, and fiber optics, including the wires forming bus 808. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*e.g.,* each item). The phrase "at least one of' does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, and other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public, regardless of whether such disclosure is explicitly recited in the above description. No claim element is to be construed under the provisions of 35 U.S.C. §112, sixth paragraph, unless the element is expressly recited using the phrase "means for" or, in the case of a method claim, the element is recited using the phrase "step for."

While this specification contains many specifics, these should not be construed as limitations on the scope of what may be described, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially described as such, one or more features from a described combination can in some cases be excised from the combination, and the described combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, brief description of the drawings, abstract, and drawings are hereby incorporated into the disclosure and are provided as illustrative examples of the disclosure, not as restrictive descriptions. It is submitted with the understanding that they will not be used to limit the scope or meaning of the claims. In addition, in the detailed description, it can be seen that the description provides illustrative examples and the various features are grouped together in various implementations for the purpose of streamlining the disclosure. The method of disclosure is not to be interpreted as reflecting an intention that the described subject matter requires more features than are expressly recited in each claim. Rather, as the claims reflect, inventive subject matter lies in less than all features of a single disclosed configuration or operation. The claims are hereby incorporated into the detailed description, with each claim standing on its own as a separately described subject matter.

The claims are not intended to be limited to the aspects described herein, but are to be accorded the full scope consistent with the language claims and to encompass all legal equivalents. Notwithstanding, none of the claims are intended to embrace subject matter that fails to satisfy the requirements of the applicable patent law, nor should they be interpreted in such a way.

## Claims

1. A computer-implemented method, comprising:
generating an upper-body avatar for a user of a headset;
tracking a lower-body posture of the user of the headset;
retargeting the lower-body posture to a lower-body model; and
merging the lower-body model with the upper-body avatar to form a full-body avatar for the user of the headset.

2. The computer-implemented method of claim 1, wherein generating an upper-body avatar comprises tracking a face gesture of the user with a sensor mounted on the headset.

3. The computer-implemented method of claim 1 or claim 2, wherein tracking a lower-body posture of the user comprises one or more of:
collecting an image of at least one of an arm, a leg, a hand or a foot of the user with a camera mounted on the headset;
receiving, from a mobile device, an image of the lower-body posture of the user;
receiving an acceleration signal from an inertial measurement unit in the headset;
identifying a running motion or a walking motion from a frequency in an acceleration signal from an inertial motion unit in the headset;
identifying a sitting posture or a standing posture of the user;
determining the lower-body posture based on a physical constraint for a lower-body motion.

4. The computer-implemented method of any preceding claim, wherein retargeting the lower-body posture to a lower-body model comprises optimizing a loss function in the lower-body model with the lower-body posture as a ground truth baseline for the loss function.

5. The computer-implemented method of any preceding claim, wherein merging the lower-body model with the upper-body avatar comprises removing object collisions of the lower-body model with an object in an immersive reality application.

6. A system, comprising:
a memory storing multiple instructions; and
one or more processors configured to execute the instructions and cause the system to perform operations, the operations comprising;
to generate an upper-body avatar for a user of a headset;
to track a lower-body posture of the user of the headset;
to retarget the lower-body posture to a lower-body model; and
to merge the lower-body model with the upper-body avatar to form a full-body avatar for the user of the headset.

7. The system of claim 6, wherein to generate an upper-body avatar the one or more processors execute instructions to track a face gesture of the user with a sensor mounted on the headset.

8. The system of claim 6 or 7, wherein to track a lower-body posture of the user the one or more processors execute instructions to collect an image of at least one of an arm, a leg, a hand or a foot of the user with a camera mounted on the headset.

9. The system of one of claims 6 to 8, wherein to track a lower-body posture of the user the one or more processors execute instructions to receive, from a mobile device, an image of the lower-body posture of the user.

10. The system of one of claims 6 to 9, wherein to track a lower-body posture of the user the one or more processors execute instructions to receive an acceleration signal from an inertial measurement unit in the headset.

11. A computer-implemented method for training a model to provide a view of a subject to an auto stereoscopic display in a virtual reality headset, comprising:
collecting multiple images of a lower body of a one or more subjects in different postures, according to a capture script;
updating a posture encoder and a movement encoder in a three-dimensional lower-body model using the images of the lower body of the one or more subjects; and
generating, with the three-dimensional lower-body model, a synthetic view of a lower body of a new subject.

12. The computer-implemented method of claim 11, wherein updating a movement encoder in the three-dimensional lower-body model comprises identifying a signal from a motion sensor indicative of the different postures of the one or more subjects.

13. The computer-implemented method of claim 11 or 12, wherein the different postures include a calisthenic posture of a subject, further comprising collecting a heart rate signal from the subject and updating the movement encoder with the heart rate signal.

14. The computer-implemented method of one of claims 11 to 13, further comprising merging the three-dimensional lower-body model with an upper-body model of the new subject to form a full-body model of the new subject.

15. The computer-implemented method of one of claims 11 to 14, further comprising providing the three-dimensional lower-body model to an immersive application installed in a headset.
